# EUROPÄISCHE PATENTANMELDUNG

(11) **EP 4 510 019 A1**
(43) Veröffentlichungstag der Anmeldung: **19.02.2025**
(21) Anmeldenummer: 23191616.4
(22) Anmeldetag: 16.08.2023
(51) Int. Cl.: G06F 21/30, G06F 21/44, G06F 21/45, H04L 9/40, G06F 21/53, G06F 21/55, G06F 21/62

(54) **VERFAHREN ZUM ÜBERPRÜFEN EINES ZUGRIFFS AUF ZUGANGSINFORMATIONEN INNERHALB EINER LAUFZEITUMGEBUNG, SOWIE LAUFZEITUMGEBUNGS-SYSTEM, COMPUTERPROGRAMM UND DATENTRÄGER**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Die Erfindung betrifft ein Verfahren zum Überprüfen eines Zugriffs auf Zugangsinformationen innerhalb einer Laufzeitumgebung (2), wobei sich eine Container-Instanz (3, 7) mittel zumindest einer Zugangsinformation (5) in der Laufzeitumgebung (2) authentisieren kann, aufweisend:
- Bereitstellen von zumindest einer Zugangsinformation (5) durch eine Orchestrierungseinheit (4),
- Zuordnen von einer Zugangsdatenrichtlinie (6) zu der Zugangsinformation (5) durch die Orchestrierungseinheit (4),
- Zuordnen von der Zugangsinformation (5) an zumindest eine Container-Instanz (7) durch die Orchestrierungseinheit (4),
- Erkennen eines Zugriffs auf die Zugangsinformation (5) durch eine Anomalieerkennungseinheit (8),
- Überprüfen des erkannten Zugriffs durch die Anomalieerkennungseinheit (8) dahingehend, ob der erkannte Zugriff durch eine der Zugangsinformation (5) zugeordnete Container-Instanz (7) erfolgt, und
- falls nicht: Ändern der einen Zugangsinformation (5) auf Basis der entsprechenden Zugangsdatenrichtlinie (6) durch die Orchestrierungseinheit (4).

Des Weiteren betrifft die Erfindung ein Laufzeitumgebungs-System (1), ein Computerprogramm (14) sowie einen elektronisch lesbaren Datenträger (15).

## Beschreibung

Die Erfindung betrifft ein Verfahren zum Überprüfen eines Zugriffs auf Zugangsinformationen innerhalb einer Laufzeitumgebung, wobei sich eine Container-Instanz mittels zumindest einer Zugangsinformation in der Laufzeitumgebung authentisieren kann.

Des Weiteren betrifft die Erfindung ein Laufzeitumgebungs-System, ein Computerprogramm sowie einen elektronisch lesbaren Datenträger.

Auf containerbasierten Laufzeitumgebungen werden heutzutage Container-Instanzen mit Hilfe eines "Images" oder einem Container Abbild und einer "Deployment"-Konfiguration erzeugt und Ressourcen des darunter liegenden Host beziehungsweise der Laufzeitumgebung zugeordnet. Ressourcen können speziell einer von einer darunterliegenden Laufzeitumgebung bzw. vom Hosts bereitgestellt werden. Neben den Hardware-Ressourcen und Software-Ressourcen ist es hierbei üblich, dass sich einzelne Instanzen beziehungsweise Objekte mit Hilfe von Zugangsdaten, wie SSH-Schlüsseln, privaten Zertifikationsschlüsseln oder Passwörtern innerhalb oder außerhalb der Laufzeitumgebung authentisieren. Diese Zugangsdaten können durch einen Orchestrator, ein "Secret-Management-System" oder ein zentrales Secret-Management-System verwaltet, beschränkt oder im Zugriff beschränkt werden. Üblicherweise erfolgt hierbei die Zugriffssteuerung über "Role-based-Access-Control". Mittels eines Tokens kann sich die Instanz am Secret-Management-System authentisieren. Das Secret-Management-System autorisiert die Anfrage und gibt den Zugriff auf das Zugangsdatum oder die Zugangsdaten frei. Mit Hilfe des Tokens kann somit die Instanz das Zugangsdatum erhalten bzw. "abholen". Ebenso denkbar ist, dass der Orchestrator de Zugriffssteuerung übernimmt und der Instanz das Zugangsdatum mit Hilfe eines dynamisch erzeugten "Volumens" oder einer Umgebungsvariablen zuordnet.

Um zu verhindern, dass solche Zugangsdaten kompromittiert werden, werden diese vorrangig verschlüsselt übertragen und/oder auch in ihrer Gültigkeit beschränkt. Ein Problem, welches hierdurch jedoch nicht gelöst werden kann, ist der Fall, dass sich ein Angreifer direkt auf der Laufzeitumgebung oder dem darunterliegenden Gerät befindet und hierdurch in der Lage ist, auf die Container-Instanz zuzugreifen und direkt von dieser die innerhalb der Instanz vorliegenden ungeschützten Zugangsdaten auszuspähen in anderem Kontext zu verwenden.

Ein Anwendungsbeispiel soll hierbei eine containerbasierte Industrial-Edge-Applikation, also eine Anwendung in einer Produktions- beziehungsweise Fertigungsstraße, sein, die sich zum Beispiel mit Hilfe eines eindeutigen Passworts an ein außerhalb der Laufzeitumgebung befindliches Backend-System anmeldet und hierfür keine modernen Zugangsmechanismen, wie beschränkte Access-Token, verwendet werden können.

Bei diesem Anwendungsbeispiel ist somit das Problem, dass das Passwort nicht zeitlich begrenzt werden kann und andererseits ohne Zugriffsüberwachung nicht sichergestellt werden kann, dass andere, auf dem Gerät befindliche Applikationen, Systembenutzer oder Angreifer auf die Daten zugreifen und somit das Passwort von einer nicht-autorisierten Entität ausgelesen wird.

Im Stand der Technik gibt es beispielsweise die Möglichkeit, dass von einem IAM-System ("Identity-Access-Management-System") zeitlich beschränkte Access-Token oder Zertifikate ausgestellt werden und diese erneuert werden, sofern das angefragte System beim IAM-System dies anfordert. Problem ist hierbei, dass sowohl der angefragte Client als auch die Zielapplikation die Einbindung des IAM-Systems unterstützen müssen. Hierbei kann beispielsweise eine Unterstützung des Verfahrens "OAuth", welches üblicherweise bei Web-basierten Anwendungen eingesetzt wird oder angewendet werden.

Beispielsweise gibt es Verfahren, bei welchen Zertifikate oder Access-Token zeitlich begrenzt ausgestellt und das "Sidecar-Container", welches die Authentisierung durchführt, die Zugangstoken beziehungsweise Zertifikate eigenständig anfordert. Der "Sidecar-Container" ist speziell eine Container-Instanz die "Zulieferungsarbeiten" für die eigentliche Container-Instanz durchführt. Beispielsweise führt diese die Authentisierung an anderen Services transparent für die eigentliche Container-Instanz durch.

Des Weiteren gibt es Lösungen, bei welchen automatisch Zertifikate und die dazugehörigen Schlüssel rotieren. Hierbei wird die Rotation ausschließlich durch das Ablaufdatum des Zertifikats gesteuert, nicht jedoch durch verdächtige Zugriffe auf den verwalteten privaten Schlüssel.

Eine Aufgabe der vorliegenden Erfindung besteht darin, einen Zugriff auf Zugangsinformationen, wie beispielsweise Zugangsdaten, einer Laufzeitumgebung sicherer zu gestalten, indem unberechtigte Zugriffe auf solche Zugangsinformation effizienter erkannt werden.

Diese Aufgabe wird durch ein Verfahren, ein Laufzeitumgebungs-System, ein Computerprogramm sowie einen elektronisch lesbaren Datenträger gemäß den unabhängigen Patentansprüchen gelöst. Sinnvolle Weiterbildungen ergeben sich aus den abhängigen Patentansprüchen.

Ein Aspekt der Erfindung betrifft ein Verfahren zum Überprüfen eines Zugriffs auf Zugangsinformationen innerhalb einer Laufzeitumgebung, wobei sich eine Container-Instanz mittels zumindest einer Zugangsinformation in der Laufzeitumgebung authentisieren kann, aufweisend:
- Insbesondere Bereitstellen von zumindest einer Zugangsinformation durch eine Orchestrierungseinheit der Laufzeitumgebung,
- Insbesondere Zuordnen von einer Zugangsdatenrichtlinie zu der zumindest einen Zugangsinformation durch die Orchestrierungseinheit,
- Insbesondere Zuordnen von der zumindest einen Zugangsinformation an zumindest eine Container-Instanz der Laufzeitumgebung durch die Orchestrierungseinheit,
- Insbesondere Erkennen zumindest eines Zugriffs auf die zumindest eine Zugangsinformation durch eine Anomalieerkennungseinheit,
- Insbesondere Überprüfen des erkannten Zugriffs durch die Anomalieerkennungseinheit dahingehend, ob der erkannte Zugriff durch eine der zumindest einen Zugangsinformation zugeordnete Container-Instanz erfolgt, und
- falls nicht: Insbesondere Ändern der zumindest einen Zugangsinformation auf Basis der entsprechenden Zugangsdatenrichtlinie durch die Orchestrierungseinheit.

Durch das vorgeschlagene Verfahren kann eine verbesserte Überprüfung beziehungsweise Überwachung von Zugriffen auf Zugangsinformationen bereitgestellt beziehungsweise geschaffen werden. Hierbei kann vor allem unberechtigter Zugriff einer Entität erkannt werden und daraufhin eine Änderung der entsprechenden Zugangsinformationen vorgenommen werden. Mit anderen Worten ausgedrückt können die Zugangsinformationen, auf welche ein unberechtigter beziehungsweise böswilliger Zugriff erfolgt, entsprechend verändert beziehungsweise neu generiert werden. Dadurch kann ein entsprechender Zugriff, welcher nicht zulässig beziehungsweise durch eine nicht autorisierte Entität erfolgt, verhindert beziehungsweise unterbunden werden.

Durch das vorgeschlagene Verfahren können Zugangsinformationen vor einem unberechtigten Auslesen beziehungsweise einem unberechtigten Zugriff geschützt werden. Dadurch kann vor allem die IT-Sicherheit, insbesondere der Laufzeitumgebung, erhöht beziehungsweise verbessert werden. Mit anderen Worten ausgedrückt kann mit Hilfe des vorgeschlagenen Verfahrens durch die Orchestrierungseinheit beziehungsweise Orchestrierungskomponente, welche sich beispielsweise außerhalb der Laufzeitumgebung befindet, ein unberechtigter Zugriff auf Zugangsinformationen innerhalb und außerhalb einer Instanz, wie eine Container-Instanz, erkannt werden und aufgrund des nicht-autorisierten Zugriffs eine Passwort-Rotation beziehungsweise eine Zugangsinformationsänderung, insbesondere für die erkannte Komponente, eingeleitet und insbesondere durchgeführt werden.

Mit Hilfe des vorgeschlagenen Verfahrens kann eine ereignisgesteuerte Modifikation von Zugangsinformationen, wie Zugangsdaten, auf einer orchestrierten Umgebung, also der Laufzeitumgebung, durchgeführt werden.

Bei der Laufzeitumgebung, auch als Ausführungsumgebung bezeichnet, beschreibt die zur Laufzeit von Computerprogrammen verfügbaren und festgelegten Voraussetzungen eines bestimmten Laufzeitsystems.

Bei einer Container-Instanz kann es sich um virtuell abgetrennte Umgebungen handeln, in denen Software-Anwendungen für die Bereitstellung von Programmen isoliert sind. Container greifen beispielsweise gemeinsam auf ein Betriebssystem zu, ohne dass beispielsweise virtuelle Maschinen erforderlich sind. Ein Container wird beispielsweise üblicherweise nicht in einer eigenständigen virtuelle Maschine betrieben und besitzt auch kein eigenes, vollständiges Betriebssystem. Containerisierte Anwendungen können aus mehreren Container-Images zusammengesetzt sein. Eine Container-Instanz kann beispielsweise Komponenten enthalten, die in der Container-Instanz betriebenen Applikation erforderlich sind. Zu diesen Komponenten gehören Dateien, Umgebungsvariablen, Abhängigkeiten und Bibliotheken.

Container-Instanzen vereinfachen sowohl die Installationen, den Betrieb von Servern, Anwendungen sowie deren Management und Verteilung. Somit erleichtern Container den Umgang mit komplexen Server-Anwendungen und ermöglichen eine weitgehende Automatisierung von Roll-out-Prozessen in Rechenzentrum. Ganz besonders bei der Bereitstellung von skalierbaren, verteilten Anwendungen innerhalb von Cloud-Umgebungen von Bedeutung.

Beispielsweise kann es sich bei der Container-Instanz um eine Anwendung, Applikation oder ein Computerprogramm handeln. Mittels der zumindest einen Zugangsinformation oder mehreren Zugangsinformationen kann sich die Container-Instanz innerhalb oder von außerhalb in der Laufzeitumgebung authentisieren, um beispielsweise Prozesse oder Funktionen einer Anwendung ausführen zu können.

Eine "Gesamtapplikation" kann aus mehreren Container-Instanzen bestehen, die aus verschiedenen Container-Images erzeugt wurde. Hierbei kann dann aber auch wieder eine gegenseitige Authentisierung mit Hilfe des Zugangsdatums oder der Zugangsinformation durchgeführt werden.

Bei der zumindest einen Zugangsinformation und insbesondere bei den Zugangsinformationen kann es sich um Zugangsdaten, wie zum Beispiel Zertifikate, Passwörter oder Schlüssel handeln. Insbesondere kann es sich bei den Zugangsinformationen um Zugangsdaten handeln, welche aus einer Benutzererkennung und einem Kennwort bestehen. Somit bilden jeweils Paare eine Zugangskennung. Insbesondere können die Zugangsinformationen mehrere Zugangsdaten sowie mehrere Zugangsdaten-Paare aufweisen. Bei der Orchestrierungseinheit kann es sich um eine Orchestrierungskomponente oder einen Orchestrator handeln.

Mit der Orchestrierungseinheit kann also eine Orchestrierung durchgeführt werden. Unter einer Orchestrierung versteht man die automatisierte Konfiguration, Verwaltung und Koordinierung von Computersystemen, Anwendungen und Services.

Bei der Verwendung von Containern kann die Orchestrierungseinheit die Verteilung der Instanzen auf mehrere von ihm verwaltete Ausführungsumgebungen durchführen.

Mit der Zugangsdatenrichtlinie, welche beispielsweise als "rotation policy" bezeichnet werden kann, kann festgelegt werden, in welchen Container-Instanzen welche Prozesse die entsprechenden Zugangsinformationen auslesen dürfen und welches Verhalten bei einem erkannten Verstoß beziehungsweise unberechtigten Zugriff durchgeführt werden soll. Beispielsweise kann die Zugangsdatenrichtlinie zunächst generiert bzw. erzeugt werden.

Mittels der Orchestrierungseinheit können einer Container-Instanz zumindest eine Zugangsinformation beziehungsweise mehrere Zugangsinformationen zugewiesen werden. Somit erfolgt hier eine systemseitige Zuweisung. Die Zugangsinformation oder die mehreren Zugangsinformationen können entsprechend bereitgestellt werden, oder durch die Orchestrierungseinheit erzeugt beziehungsweise generiert werden. Mittels der Anomalieerkennungseinheit oder einem Anomalieerkennungsmechanismus kann ein jeweiliger Zugriff dahingehend überprüft werden, ob es sich um einen berechtigten oder unberechtigten Zugriff handelt. Dabei wird systemseitig überprüft, ob der Zugriff durch eine Container-Instanz beziehungsweise eine Instanz durchgeführt wird, welche auch tatsächlich berechtigt ist, um die den Zugriff betreffende Zugangsinformation beziehungsweise Zugangsinformationen verwenden zu dürfen. Sollte hier ein unberechtigter Zugriff festgestellt werden, so wird diese zumindest eine Zugangsinformation, auf welcher ein unberechtigter Zugriff stattgefunden hat, abhängig von der zu dieser Zugangsinformation zugeordneten Zugangsdatenrichtlinie eine Änderung dieser Zugangsinformationen durchgeführt. Dies erfolgt insbesondere automatisch. Somit kann dieser unberechtigte Zugriff verhindert beziehungsweise unterbunden werden.

Mittels des vorgeschlagenen Verfahrens kann eine Rotation von Zugangsdaten beziehungsweise Zertifikatsschlüsseln nach einem unerwarteten Zugriff auf eine containerisierten Laufzeitumgebung durchgeführt werden.

Sollte wiederum der Zugriff durch eine berechtigte Instanz erfolgen, so kann diese Instanz auf die entsprechende Zugangsinformation zugreifen.

Insbesondere kann es sich bei dem vorgeschlagenen Verfahren um ein computerimplementiertes Verfahren handeln.

In einem Ausführungsbeispiel ist vorgesehen, dass der das Ändern der zumindest einen Zugangsinformation betreffenden Container-Instanz die geänderte zumindest eine Zugangsinformation bereitgestellt wird. Dadurch kann, nachdem ein unberechtigter beziehungsweise unzulässiger Zugriff auf diese Zugangsinformation verhindert beziehungsweise unterbunden wurde, die neu angepasste beziehungsweise geänderte Zugangsinformation wiederum den Container-Instanzen bereitgestellt, insbesondere übertragen werden, sodass diese wiederum auf dem aktuellsten Stand sind und diese wiederum einen Zugriff vornehmen können. Somit kann hier verhindert werden, dass nach der Änderung der zumindest einen Zugangsinformation ein berechtigter beziehungsweise zulässiger Zugriff einer Container-Instanz nicht erfolgreich durchgeführt werden kann, da bei einem vorherigen unberechtigten Zugriff diese Zugangsinformation verändert wurde. Somit können insbesondere alle Container-Instanzen, welche den dem zumindest einen unberechtigten Zugriff unterworfenen Zugangsinformationen zugeordnet sind, über die Änderung dieser Zugangsinformation informiert werden.

Mit anderen Worten ausgedrückt können bei einem unberechtigten Zugriff auf eine Zugangsinformation alle Container-Instanzen, welche auf diese Zugangsinformationen referenzieren, darüber informiert werden, dass nun eine geänderte Zugangsinformation vorliegt und diese wiederum diesen Container-Instanzen bereitgestellt wird.

Durch diese, insbesondere automatisierte, Anpassung von Zugangsinformationen beziehungsweise Zugangsdaten nach einem erkannten beziehungsweise festgestellten unberechtigten Zugriff kann fortlaufend die Sicherheit und insbesondere die Datensicherheit erhöht werden. Somit kann eine Abwehr bezüglich unberechtigter Zugriffe verbessert werden.

In einem Ausführungsbeispiel ist vorgesehen, dass der Container-Instanz die geänderte zumindest eine Zugangsinformation übermittelt wird und anschließend eine Aktualisierung der Container-Instanz durchgeführt wird, wobei von einer Überwachungsfunktion der Container-Instanz überprüft wird, ob die geänderte zumindest eine Zugangsinformation in der Container-Instanz aktualisiert werden konnte. Beispielsweise kann mittels der Orchestrierungseinheit, welche die Änderung der Zugangsinformation vorgenommen hat, automatisch die Übertragung beziehungsweise Übersendung dieser geänderten Zugangsinformation an alle betreffenden Container-Instanzen vorgenommen werden.

Die einzelnen Container-Instanzen beziehungsweise die zumindest eine Container-Instanz können selbständig beziehungsweise eigenständig eine Anpassung der gespeicherten, zugeordneten Zugangsinformationen vornehmen, sodass nun die abgeänderte beziehungsweise geänderte Zugangsinformation gespeichert ist. Um zu erreichen, dass nach der Erkennung eines unberechtigten Zugriffs und Änderung der Zugangsinformation die weiteren Container-Instanzen weiterhin einen Zugriff innerhalb der Laufzeitumgebung auf die ihnen zugewiesenen Zugangsinformationen vornehmen können, kann eine Überwachung beziehungsweise Überprüfung vorgenommen werden. Hierbei wird überprüft, insbesondere mittels der Überwachungsfunktion, ob der zumindest einen Container-Instanz zum einen die geänderte Zugangsinformation übermittelt und nun in der Container-Instanz gespeichert beziehungsweise abgelegt ist. Hierbei kann wiederum die Speicherung beziehungsweise Aktualisierung in einer Datenbank oder in einer Recheneinheit der Container-Instanz erfolgen.

In einem Ausführungsbeispiel ist vorgesehen, dass, falls die Aktualisierung nicht erfolgreich durchgeführt werden konnte, der Orchestrierungseinheit eine entsprechende Information übermittelt wird, und daraufhin wird durch die Orchestrierungseinheit ein erneutes Ändern der bereits geänderten Zugangsinformation durchgeführt.

Beispielsweise kann aufgrund von Fehlern beziehungsweise fehlerhaften Zuständen die Übertragung der geänderten Zugangsinformation nicht erfolgreich durchgeführt worden sein, und wiederum können bei der Aktualisierung der geänderten Zugangsinformationen Fehler aufgetreten sein. Um hier Abhilfe zu schaffen und einen Zugriff der Container-Instanz auf die entsprechend ihr zugeordneten Zugangsinformationen weiterhin gewährleisten zu können, kann eine erneute Anpassung beziehungsweise ein erneutes Ändern der bereits geänderten Zugangsinformation erfolgen. Somit kann beispielsweise mittels einer Recheneinheit der entsprechenden Container-Instanz oder durch die Überwachungsfunktion der Orchestrierungseinheit mitgeteilt werden, beispielsweise mittels Hinweissignals, dass die Aktualisierung der geänderten Zugangsinformation nicht erfolgreich durchgeführt werden konnte. Daraufhin erfolgt eine erneute Anpassung der bereits geänderten Zugangsinformationen, um zu erreichen, dass alle Container-Instanzen der Laufzeitumgebung, welche Zugriff auf die Laufzeitumgebung haben, auch Zugriffe erfolgreich durchführen können. Ebenso kann es vorkommen, dass die erneut geänderten Zugangsinformationen deshalb nicht aktualisiert werden konnten, da hier bereits ein Cyber-Angriff oder ein sonstig böswilliger Eingriff vorgenommen wird. Um wiederum hier Abhilfe zu schaffen, wird eine erneute Anpassung beziehungsweise Neugenerierung dieser Zugangsinformationen und die entsprechende Zuordnung an die Container-Instanzen vorgenommen.

Die bereits geänderte Zugangsinformation kann wiederum durch die Orchestrierungseinheit erneut an die entsprechenden Container-Instanzen übermittelt werden.

Zusätzlich oder anstatt kann hinsichtlich der Aktualisierung hinsichtlich der Feststellung, ob die Aktualisierung erfolgreich durchgeführt werden konnte oder nicht, eine Zeitdauer der Aktualisierung berücksichtigt werden. Hierbei kann ein vorgegebener zeitlicher Grenzwert festgelegt werden, innerhalb welchem die Aktualisierung durchzuführen ist. Sollte nach dieser vorgegebenen Zeitdauer keine positive Rückmeldung hinsichtlich der Aktualisierung der Orchestrierungseinheit vorliegen, so wird aus Sicherheitsgründen und insbesondere aus IT-Sicherheitsgründen die bereits geänderte Zugangsinformation erneut geändert, um insbesondere einen unberechtigten Zugriff zu verhindern.

In einem Ausführungsbeispiel ist vorgesehen, dass mit der Orchestrierungseinheit überprüft wird, ob weitere Container-Instanzen die zumindest eine Zugangsinformation, welche geändert wird, verwenden, und falls ja, dann wird diesen Container-Instanzen die geänderte Zugangsinformation bereitgestellt. Beispielsweise kann hier bereits bei der Zuordnung der Zugangsinformationen an Container-Instanzen eine entsprechende Gruppierung beziehungsweise Kategorisierung der Container-Instanzen hinsichtlich der zugeordneten Zugangsinformationen durchgeführt werden, sodass anschließend bei einem erkannten unberechtigten Zugriff die Container-Instanzen, welche ebenfalls die geänderte Zugangsinformation betreffen, diese auch wiederum übermittelt bekommen können.

In einem Ausführungsbeispiel ist vorgesehen, dass mit der Zugangsdatenrichtlinie festgelegt wird, welche Maßnahmen bei einem unberechtigten Zugriff auf die zumindest eine Zugangsinformation durchzuführen sind. Dadurch kann systemseitig auf rasche Weise erkannt werden, was bei einem unberechtigten Zugriff auf die Zugangsinformation entsprechend zu veranlassen beziehungsweise durchzuführen ist. Hierbei können beispielsweise der Umfang beziehungsweise das Maß der Änderung der Zugangsinformation festgelegt werden.

Ebenso können entsprechende Warnhinweise beziehungsweise Sicherheitsmechanismen, welche durchzuführen beziehungsweise zu aktivieren sind, mit der Zugangsdatenrichtlinie vorgegeben werden. Mit anderen Worten ausgedrückt kann mit der Zugangsdatenrichtlinie für eine jeweilige Zugangsinformation systemseitig festgelegt beziehungsweise vorgegeben werden, welche Sicherheitsmaßnahmen (insbesondere wie und wann) durch die Orchestrierungseinheit bei Feststellung eines unberechtigten Zugriffs durchzuführen beziehungsweise zu aktivieren sind.

In einem Ausführungsbeispiel ist vorgesehen, dass mit den Maßnahmen ein Ausführen bestimmter Befehle auf einer durch den unberechtigten Zugriff betroffenen Container-Instanz, ein Übersenden bestimmter Anweisungssignale an eine durch den unberechtigten Zugriff betroffenen Container-Instanz und/oder eine Re-Konfiguration einer durch den unberechtigten Zugriff betroffenen Container-Instanz durchgeführt wird. Dies sind beispielhafte Maßnahmen, welche in denkbarer Weise ausgeführt beziehungsweise durchgeführt werden können. Hierbei können insbesondere durch die Orchestrierungseinheit zumindest einige dieser Maßnahmen entsprechend durchgeführt beziehungsweise veranlasst werden, um durchgeführt zu werden. Hierbei können entsprechende Signale beziehungsweise Befehle von der Orchestrierungseinheit an die jeweilige Container-Instanz übermittelt werden, sodass wiederum mittels einer Recheneinheit oder einer Verarbeitungsreinheit einer jeweiligen Container-Instanz die entsprechenden Maßnahmen umgesetzt werden können. Dadurch kann sichergestellt werden, dass die der unberechtigten Zugriff betreffenden Zugangsinformation betreffenden Container-Instanzen nicht durch weitere Gefahren oder Angriffe bedroht sind. Dies erhöht insbesondere die allgemeine Sicherheit betreffend die Laufzeitumgebung und die Zugangsinformationen. Insbesondere ist die Benachrichtigung der anderen Instanzen dazu gedacht, dass die darin betriebenen "Client"-Applikationen darüber informiert werden, dass sich die für die Anmeldung an der "Server"-Applikation erforderliche Anmeldeinformation geändert hat und ein neues Zugangsdatum bzw. Zugangsinformation hierfür bereitgestellt wurde.

In einem Ausführungsbeispiel ist vorgesehen, dass mit der Zugangsdatenrichtlinie festgelegt wird, welcher Benutzer oder Prozess auf die zumindest eine Zugangsinformation zugreifen darf. Beispielsweise kann der Orchestrierungseinheit bei der Zuordnung der Zugangsinformationen sowie den jeweiligen Container-Instanzen bereits eine Information mitgeteilt werden, welcher Benutzer oder welche Prozesse auf eine jeweilige Zugangsinformation zugreifen darf oder nicht. Dies kann vorteilhaft bei der Erkennung eines unberechtigten Zugriffs verwendet werden, da hier somit anhand der Entität beziehungsweise einer Instanz, welche auf eine Zugangsinformation zugreifen möchte, bereits eine Überprüfung vorgenommen werden kann, ob hier ein entsprechender Benutzer oder ein entsprechender Prozess diesen Zugriff vornimmt oder nicht. Somit kann hier eine leichtere Erkennung eines unberechtigten Zugriffs vorgenommen werden. Somit kann bei einem Überprüfen des erkannten Zugriffs die Zugangsdatenrichtlinie berücksichtigt werden.

In einem Ausführungsbeispiel ist vorgesehen, dass bei dem Überprüfen des erkannten Zugriffs eine individuelle Information betreffend die diesen Zugangsdaten zugeordnete Container-Instanz der Anomalieerkennungseinheit bereitgestellt wird. Durch diese individuelle Information, wie zum Beispiel spezifische Informationen betreffend die Container-Instanz, kann die Anomalieerkennungseinheit den erkannten Zugriff besser beziehungsweise effizienter überprüfen, da umfangreiche Informationen vorliegen, um einzuschätzen beziehungsweise feststellen zu können, ob es sich hierbei um einen berechtigten oder unberechtigten Zugriff handelt.

In einem Ausführungsbeispiel ist vorgesehen, auf Basis der zumindest einen Zugangsinformation und der Container-Instanzen der Laufzeitumgebung ein Anomalitätsregelwerk durch die Orchestrierungseinheit generiert und der Anomalieerkennungseinheit bereitgestellt wird, wobei das Anomalitätsregelwerk, insbesondere zusätzlich, beim Überprüfen es erkannten Zugriffs berücksichtigt wird. Somit kann hier ein weiteres Überprüfungskriterium bereitgestellt werden, um die erkannten Zugriffe besser hinsichtlich illegaler beziehungsweise unberechtigter Zugriffe überprüfen zu können. Beispielsweise kann hier durch die Orchestrierungseinheit eine initiale Erstellung und Instanziierung des Anomalitätsregelwerks durchgeführt werden. Das Anomalitätsregelwerk kann insbesondere bei bereits bei der Zuordnung der Zugangsdatenrichtlinie und den Zugangsinformationen generiert werden.

In einem Ausführungsbeispiel ist vorgesehen, dass, falls beim Überprüfen des erkannten Zugriffs festgestellt wird, dass der erkannte Zugriff durch ein unberechtigtes Objekt erfolgt, von der Anomalieerkennungseinheit ein entsprechendes Warnsignal generiert und an die Orchestrierungseinheit übermittelt wird. Somit kann insbesondere unverzüglich bei Feststellung, dass ein unberechtigter Zugriff durch ein Objekt, wie eine Entität, erfolgt, eine sofortige Warnung beziehungsweise Alarmierung vorgenommen werden. Mittels des generierten Warnsignals kann also die Orchestrierungseinheit von der Anomalieerkennungseinheit darüber informiert beziehungsweise in Kenntnis gesetzt werden, dass ein unberechtigter Zugriff vorliegt und, insbesondere schnellstmöglich, entsprechende Maßnahmen beziehungsweise Sicherheitsvorkehrungen eingeleitet beziehungsweise durchzuführen sind.

In einem Ausführungsbeispiel ist vorgesehen, dass mit der Orchestrierungseinheit auf Basis des Warnsignals eine situationsangepasste Modifikation der zumindest einen Zugangsinformation durchgeführt wird. Hierbei kann bereits ein Vorteil festgelegt sein, wenn entsprechende Maßnahmen zu einer jeweiligen Situation vorgenommen werden sollten. Insbesondere können durch die Modifikation zu einer jeweiligen Situation betreffend einen erkannten Zugriff entsprechende Sicherheitsmaßnahmen, insbesondere datensicherheitstechnische Maßnahmen, vorgenommen beziehungsweise durchgeführt werden. Durch die Modifikation der Zugangsinformation kann erreicht werden, dass ein Zugriff, welcher nicht berechtigt ist, verhindert werden kann.

Ein weiterer Aspekt der Erfindung betrifft ein Laufzeitumgebungs-System mit,
- einer Laufzeitumgebung,
- mehreren Container-Instanzen, welche sich mittels eines Zugriffs auf zumindest einen Zugriffsinformation innerhalb der Laufzeitumgebung authentisieren können,
- einer Orchestrierungseinheit zum Bereitstellen der zumindest einen Zugriffsinformation,
- der Orchestrierungseinheit, die ausgebildet ist, um eine Zugangsdatenrichtlinie zu der zumindest einen Zugangsinformation zu zuordnen,
- der Orchestrierungseinheit, die ausgebildet ist, die zumindest eine Zugangsinformation zu zumindest einer Container-Instanz zu zuordnen,
- einer Anomalieerkennungseinheit zum Erkennen zumindest eines Zugriffs auf die zumindest eine Zugangsinformation,
- der Anomalieerkennungseinheit, die ausgebildet ist, den erkannten zumindest einen Zugriffs dahingehend zu überprüfen, ob der erkannte Zugriff durch eine der zumindest einen Zugangsinformation zugeordnete Container-Instanz erfolgt, und
- der Orchestrierungseinheit, die ausgebildet ist, die zumindest eine Zugangsinformation auf Basis der entsprechenden Zugangsdatenrichtlinie zu ändern, falls der erkannte Zugriff nicht durch die der zumindest einen Zugangsinformation zugeordneten Container-Instanz erfolgt.

Insbesondere kann mit Hilfe des vorgeschlagenen Laufzeitumgebungs-Systems das vorher genannte Verfahren nach dem vorherigen Aspekt durchgeführt beziehungsweise ausgeführt werden.

Beispielsweise kann es sich bei der Laufzeitumgebung um eine Container-Laufzeitumgebung (wie z.B. Docker) handeln.

Speziell können sich die mehreren Container-Instanzen mittels der zumindest einen Zugriffsinformation innerhalb der Laufzeitumgebung oder gegenseitig authentisieren.

Ein weiterer Aspekt der Erfindung betrifft ein Computerprogramm, welches direkt in einen Speicher einer Steuereinrichtung eines Computernetzwerk-Systems nach dem vorherigen Aspekt ladbar ist, mit Programm-Mitteln, um das Verfahren nach einem der vorhergehenden Aspekte oder einer vorteilhaften Weiterbildung daraus auszuführen, wenn das Programm in einer Steuereinrichtung eines Laufzeitumgebungs-Systems ausgeführt wird.

Ein weiterer Aspekt der Erfindung betrifft einen elektronisch lesbaren Datenträger mit darauf gespeicherten elektronisch lesbaren Steuerinformationen, welche derart ausgestaltet sind, dass sie bei Verwendung des Datenträgers in einer Steuereinrichtung eines Laufzeitumgebungs-Systems nach einem der vorhergehenden Aspekte ein Verfahren nach einem der vorhergehenden Aspekte oder einer vorteilhaften Weiterbildung daraus durchführen.

Beispielsweise kann es sich bei dem Laufzeitumgebungs-Systems um eine Cloud-basierte Technologie handeln. Speziell kann das Laufzeitumgebungs-System eine Container-Lauzeitumgebung sein, welche auf einem Betriebssystem betrieben werden kann.

Vorteilhafte Ausführungsbeispiele eines Aspekts der Erfindung können als vorteilhafte Ausführungsbeispiele eines anderen Aspekts oder aller anderen Aspekte angesehen werden. Dies gilt in umgekehrter Art und Weise ebenso.

Beispielsweise kann das Computerprogramm, der elektronisch lesbare Datenträger sowie das Laufzeitumgebungs-System Mittel aufweisen, um das erfindungsgemäße Verfahren auszuführen beziehungsweise durchzuführen.

Vorteilhafte Ausgestaltungsformen des Verfahrens sind als vorteilhafte Ausgestaltungsformen des weiteren Verfahrens, des Laufzeitumgebungs-Systems, des Computerprogramms sowie des elektronisch lesbaren Datenträgers anzusehen. Das Laufzeitumgebungs-Systems, das Computerprogramm und der elektronisch lesbare Datenträger weisen gegenständliche Merkmale auf, welche eine Durchführung eines der Verfahren oder einer vorteilhaften Ausgestaltungsform davon ermöglichen.

Unabhängig vom grammatikalischen Geschlecht eines bestimmten Begriffes sind Personen mit männlicher, weiblicher oder anderer Geschlechteridentität mit umfasst.

In verschiedenen Ausführungsbeispielen beinhaltet die Auswerteeinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Sofern nicht anders angegeben, können alle Schritte des, insbesondere computerimplementierten, Verfahrens von mindestens einer Recheneinheit durchgeführt werden, die auch als Datenverarbeitungsvorrichtung bezeichnet werden kann. Insbesondere kann die Datenverarbeitungsvorrichtung, die mindestens eine Verarbeitungsschaltung umfasst, die zur Durchführung eines erfindungsgemäßen, insbesondere computerimplementierten, Verfahrens ausgebildet oder angepasst ist, die Schritte des computerimplementierten Verfahrens durchführen. Hierzu kann in der Datenverarbeitungsvorrichtung insbesondere ein Computerprogramm gespeichert sein, das Anweisungen umfasst, die bei Ausführung durch die Datenverarbeitungsvorrichtung, insbesondere die mindestens eine Verarbeitungsschaltung, die Datenverarbeitungsvorrichtung veranlassen, das computerimplementierte Verfahren auszuführen.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehen oder von denen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

Die nachfolgenden Figuren zeigen in:
- FIG 1: eine schematische Darstellung beziehungsweise Übersicht der Komponenten des Laufzeitumgebungs-Systems; und
- FIG 2: ein beispielhaftes Flussdiagramm, wie ein unberechtigter Zugriff innerhalb einer Laufzeitumgebung erkannt werden kann und welche Maßnahmen dagegen ergriffen werden können.

In den Figuren sind funktionsgleiche Elemente mit denselben Bezugszeichen versehen.

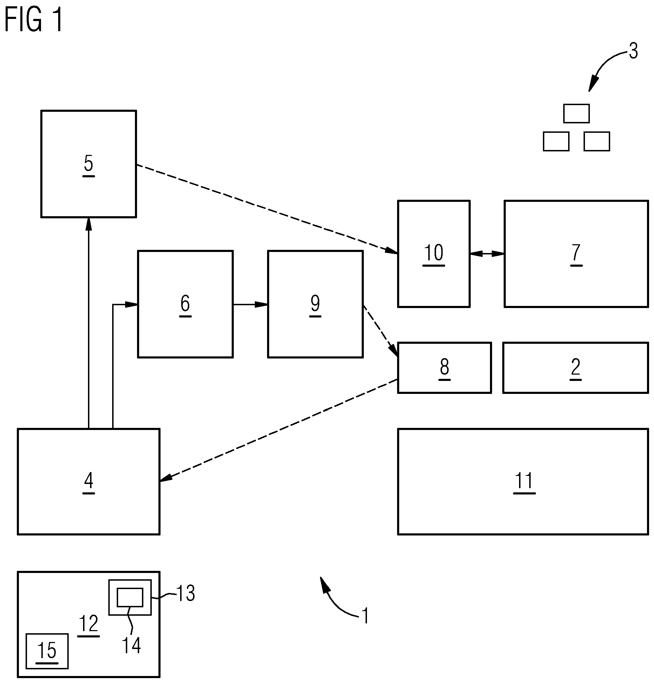

Die FIG 1 zeigt eine schematische Darstellung eines Laufzeitumgebungs-Systems 1. Dieses übergeordnete, computerbasierte beziehungsweise datentechnische System kann insbesondere zur Überprüfung eines Zugriffs auf Zugangsinformationen innerhalb einer Laufzeitumgebung 2 verwendet werden. Das Laufzeitumgebungs-System 1 kann beispielsweise mehrere Container-Instanzen 3 beziehungsweise Instanzen beziehungsweise datentechnische Objekte aufweisen. Mittels der Container-Instanzen 3 können beispielsweise Prozesse oder Funktionen einer Anwendung ausgeführt werden. Hierzu können sich die Container-Instanzen 3 mittels eines Zugriffs auf eine zu einer Container-Instanz 3 zugeordnete Zugriffsinformation innerhalb der Laufzeitumgebung 2 oder von außerhalb der Laufzeitumgebung 2 authentisieren.

Bei der Laufzeitumgebung 2 kann es sich insbesondere um eine containerisierte Laufzeitumgebung handeln. Aus Gründen der Sicherheit, insbesondere der IT-Sicherheit, darf auf den Zugangsinformationen, wie zum Beispiel Zugangsdaten, kein illegaler oder unerlaubter oder unberechtigter Zugriff stattfinden. Hierzu müssen bestimmte Zugriffskontrollen beziehungsweise Zugriffsmechanismen bereitgestellt werden. Hier setzt die vorliegende Erfindung vorteilhaft an. Mittels eines Anomalieerkennungsmechanismus kann ein Auslesen einer Zugriffsinformation, wie zum Beispiel ein "Secret", von einem unerwarteten Prozess, wie zum Beispiel einer Instanz, mittels einer Orchestrierungseinheit 4 beziehungsweise eines Orchestrators erkannt werden. Insbesondere kann es sich bei den Container-Instanzen um Prozesse, Tasks oder Programm-Instanzen handeln.

Beispielsweise kann der Orchestrierungseinheit 4 zumindest eine Zugangsinformation 5 bereitgestellt werden. Zu dieser Zugangsinformation 5 kann durch die Orchestrierungseinheit 4 zumindest eine Zugangsdatenrichtlinie 6 zugeordnet beziehungsweise zugewiesen werden. Bei der Zugangsdatenrichtlinie 6 kann es sich beispielsweise um eine "rotation police" handeln. Die Zugangsinformation 5, welche mit der zumindest einen Zugangsdatenrichtlinie 6 referenziert wurde, kann durch die Orchestrierungseinheit 4 zumindest einer Container-Instanz 7 oder mehreren Container-Instanzen 3 zugeordnet beziehungsweise zugewiesen werden. Mit Hilfe der Zugangsdatenrichtlinie 6 kann bestimmt werden, in welchen Container-Instanzen 3, 7 welche Prozesse die zumindest eine Zugangsinformation 5 auslesen beziehungsweise darauf zugreifen dürfen und welches Verhalten bei einem bekanntem Verstoß durch die Orchestrierungseinheit 4 durchgeführt werden soll.

Mit der Zugangsdatenrichtlinie 6, welche für jede Zugangsinformation 5 individuell vorgegeben sein kann, kann festgelegt werden, welche Maßnahmen bei einem unberechtigten Zugriff auf die Zugangsinformation 5 durchzuführen sind. Hierzu kann die Zugangsdatenrichtlinie 6 eine Referenz auf die von der Orchestrierungseinheit 4 verwaltete Zugangsinformation 6 aufweisen.

Zum Beispiel kann hier mittels eines Labels, welches der Zugangsinformation 6 zugewiesen ist, eine direkte Referenz auf den Namen der Zugangsinformation oder mittels eines regulären Ausdrucks eine Referenzierung vorgenommen werden. Eine Referenz auf die Container-Instanz 7 kann ebenfalls mit Hilfe eines zugewiesenen Labels, der direkten Referenz oder mittels eines regulären Ausdrucks vorgenommen werden. Des Weiteren können mit der Zugangsdatenrichtlinie 6 verbotene oder erlaubte Prozessnamen (gegebenenfalls in Kombination mit Prozessnamen) den erlauben Benutzern (durch Angabe des Benutzernamens innerhalb der Instanz 7 oder einer Benutzer-ID) sowie der durchzuführenden Reaktion beziehungsweise Maßnahme, wie zum Beispiel "allow", "rotate secrete" oder "alarm") definiert werden.

Mit Hilfe einer Anomalieerkennungseinheit 8 können Zugriffe innerhalb der Laufzeitumgebung 2 oder von außerhalb auf die Laufzeitumgebung 2 überwacht beziehungsweise überprüft werden. Hierbei können insbesondere unberechtigte Zugriffe erkannt werden. Hierbei werden insbesondere Zugriffe auf Zugangsinformationen, wie zum Beispiel die Zugangsinformation 5, überprüft. Für das Überprüfen untersucht die Anomalieerkennungseinheit 8, ob der erkannte Zugriff durch eine der Zugangsinformation 5 zugeordnete Container-Instanz 7 erfolgt oder nicht. Falls hier ein unberechtigter Zugriff festgestellt wurde, so kann diese Zugangsinformation 5 verändert beziehungsweise neu generiert werden. Dies kann durch die Orchestrierungseinheit 4 erfolgen.

Beispielsweise kann auf Basis eines Anomalitätsregelwerks 9 Anomalien, wie unberechtigte Zugriffe, mit der Anomalieerkennungseinheit 8 durchgeführt werden.

Im Nachfolgenden werden beispielhafte Codezeilen eines Teils der Zugangsdatenrichtlinie 6 erläutert.
- Secret 1: Container instance 1/reference: process name 1: process arguments 1: allow
- Secret 1: Container instance 2/reference: process name 2: process arguments 2: allow
- any instance: any: any: alert
- ### definition of alert behavior
- secret X: Container instance a/reference: rotate secret
- secret X: Container instance b/reference: alarm only

Beispielsweise können die Zugangsinformationen in unterschiedlicher Weise den Container-Instanzen 3 zugeordnet werden. Des Weiteren können unterschiedliche Instanztypen innerhalb einer Deployment-Konfiguration in unterschiedlichen Pfaden beziehungsweise Variablennamen bereitgestellt werden. Hierbei kann in Integritätsregelwerk durch die in der Deployment-Konfiguration definierten Zielwerte instanziiert werden.

Beispielsweise kann die Bereitstellung der Zugangsinformation über Zuweisung von dynamisch erzeugten "Volumes" 10 erfolgen. Durch die Verwendung von solchem "volume" 10 kann auf die Zuhilfenahme von Umgebungsvariablen verzichtet werden. Ein Auslesen von Umgebungsvariablen ist schwerer zu detektieren, da diese nicht durch die Öffnung einer bestimmten Datei verbunden werden können, sondern auf Zuweisung in der Umgebung der Prozesse zugeordnet und einfach ausgelesen werden können. Folglich kann durch die Instanziierung des Regelwerks für jede Instanz instanziiert werden, indem der dieser Instanz zugeordneten Datei eine Zugangsinformation zugeordnet wird. Des Weiteren kann das Laufzeitumgebungs-System 1 einen Kernel 11 beziehungsweise ein Kernelsystem beziehungsweise einen Betriebssystemkernel aufweisen.

Des Weiteren ist es denkbar, dass das Laufzeitumgebungs-System 1 eine entsprechende Steuereinrichtung 12 aufweist. Des Weiteren kann hier die Steuereinrichtung 12 einen Speicher 13 aufweisen, in welchem ein Computerprogramm 14 ladbar ist, um beispielsweise das erfindungsgemäße Verfahren auszuführen. Hierzu kann das Programm 14 beispielsweise in der Steuereinrichtung ausgeführt werden. Des Weiteren kann ein elektronisch lesbarer Datenträger 15 vorgesehen sein, welcher derart ausgestaltet ist, um elektronisch lesbare Steuerinformationen zu speichern. Bei Verwendung des Datenträgers 15 in der Steuereinrichtung 12 kann insbesondere das erfindungsgemäße Verfahren ausgeführt werden.

Ist die Instanziierung beispielsweise erfolgt, kann die Zugangsdatenrichtlinie 6 an die Anomalieerkennungseinheit 8, insbesondere deren entsprechenden Knoten, übergeben werden. Eine Aktualisierung der Instanziierung und eine Aktualisierung der Anomalieüberwachungsrichtlinie beziehungsweise des Anomalitätsregelwerks 9, auf den Knoten, findet immer dann statt, wenn neue Zugangsinformationen bereitgestellt beziehungsweise generiert werden, Instanzen 3 gestoppt oder gestartet werden oder die Zugangsdatenrichtlinie 6 aktualisiert wird. Mit anderen Worten ausgedrückt kann das Anomalitätsregelwerk 9 auf Basis der Zugangsinformationen und einer Art und/oder Anzahl von Container-Instanzen 3 generiert werden.

Beispielsweise kann es sich bei der zumindest einen Zugangsinformation 5 oder bei mehreren Zugangsinformationen um vertrauliche Informationen beziehungsweise vertrauliche Daten handeln.

Beispielsweise kann durch die Anomalieerkennungseinheit 8 eine nicht autorisierte Aktion durch Auslesen einer Secret-Datei beziehungsweise der Zugangsinformation 6 festgestellt werden und dementsprechend die Orchestrierungseinheit 4 informiert werden. Die Anomalieerkennungseinheit 8 kann beispielsweise durch einen Systembefehl "fopen" für eine Secret-Datei beziehungsweise Zugangsinformation 5 erkennen, ob auf eine bestimmte Datei ein Zugriff durch einen nicht autorisierten Benutzer oder Prozess erfolgt ist oder nicht und gleicht diese mit dem bestehenden Regelwerk, insbesondere dem Anomalitätsregelwerk 9, ab. Tritt ein Alarm auf, kann das in dem Regelwerk der Zugangsdatenrichtlinie 6 definierte Verhalten ausgeführt werden. Hierbei kann beispielsweise innerhalb eines "secret management" der Orchestrierungseinheit 4 definiert werden, welche Komplexität, beispielsweise eine Zugangsinformation, besitzen soll und gegebenenfalls welche weiteren Aktionen erfolgen sollen. Hierbei kann als Aktion eine Anforderung eines neuen Zertifikats beziehungsweise einer neuen Zugangsinformation durchgeführt werden.

Sollte der Zugriff auf die Zugangsinformation 5 von außerhalb des von der Orchestrierungseinheit 4 verwalteten Bereichs verwendet werden, kann keine automatisierte Rotation durchgeführt werden. Hierbei können spezielle Warn- und Sicherheitsmechanismen ausgelöst werden.

Beispielsweise kann mit der Zugangsdatenrichtlinie 6 eine Alarmierungsrichtlinie definiert werden. Mit dieser kann definiert werden, wie eine Alarmierung beziehungsweise eine Informierung der anderen Instanzen 3 erfolgen soll, sofern diese die zugehörige Zugangsinformation 5 verwenden. Tritt ein Alarm auf, überprüft die Orchestrierungseinheit 4, welche Instanz die Zugangsinformation verwendet und ob diese zum Beispiel mit Hilfe von Labels, regulären Ausdrücken oder direkten Angaben des Instanznamens in der Alarmierungsrichtlinie referenziert werden. Weiter wird definiert, auf welche Art und Weise die Instanzen 3 über die Änderungen der Zugangsinformation 5 informiert werden sollen. In der Richtlinie können dann bestimmte Operationen definiert werden, die auf die betroffenen Instanzen 3 angewendet werden. Mögliche Operationen sind zum Beispiel die Ausführung bestimmter "Skripte" innerhalb der Instanzen 3, die Durchführung bestimmter "Kill-Signale" auf die betroffenen Instanzen 3 oder die Durchführung eines kompletten "Re-Deployment".

Bei den Container-Instanzen 3, 7 kann es üblich sein, dass die korrekte Arbeitsweise einzelner Instanzen 3, 7 mittels "Probe-Skript" oder Überwachung des Container-Probe-Skripts" überwacht wird. Diese Eigenschaft kann des Weiteren dafür verwendet werden, dass Applikationen mit bestimmtem Fehler-Code an das "Probe-Skript" übergibt, wenn hierdurch die Applikation erkennt, dass eine Änderung der Zugangsinformation, also eine "secret rotation" nicht erfolgreich durchgeführt werden konnte. Hierbei kann vor allem die Orchestrierungseinheit 4 informiert werden, sodass diese beispielsweise eine erneute Änderung der bereits geänderten Zugangsinformation 5 durchführt.

Beispielsweise kann für jeden Eintrag innerhalb der Alarmierungsrichtlinie definiert werden, wie lange (durch Angabe einer Zeitdauer) eine aktualisierte Zugangsinformation ausgestattete, benachrichtigte oder gegebenenfalls neu gestartete Container-Instanz 3, 7 durch die Orchestrierungseinheit 4 überwacht werden soll und ob im Fehlerfall die Zugangsinformation 5 wieder zurückgesetzt werden soll und auf die gleiche Art und Weise eine Benachrichtigung der Instanzen 3, 7 erfolgen soll.

Beispielsweise können sämtliche Passwort-Rotationen, also die Änderungen der Zugangsinformationen, und Alarmierungen, die keine Rotation ausführen, von der Orchestrierungseinheit 4 an ein zentrales Reporting-System weitergeleitet werden und somit ein Betreiber der orchestrierten Laufzeitumgebung 2 über nicht autorisierte Zugriffe informiert werden.

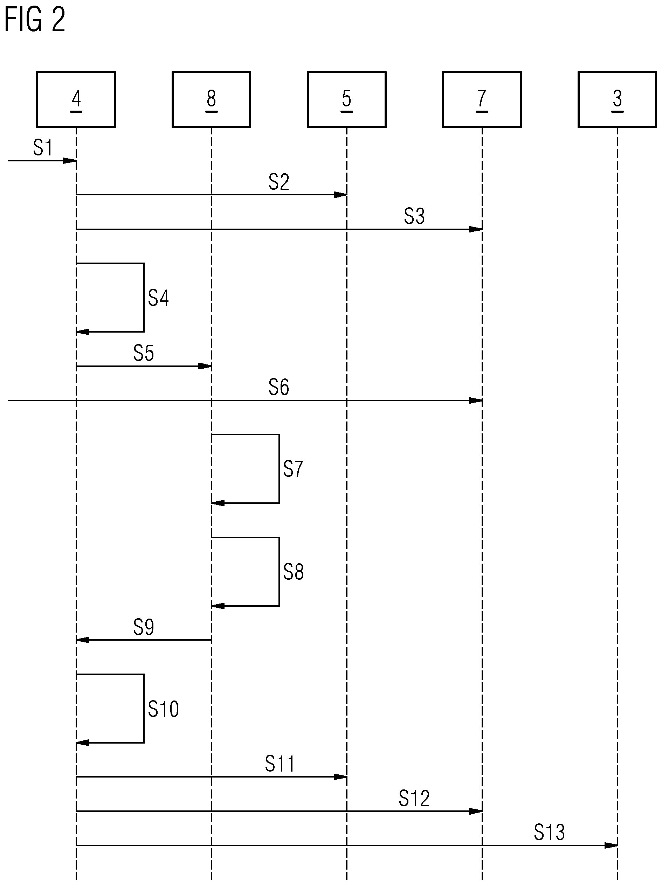

In der FIG 2 ist beispielsweise ein Ablauf hinsichtlich der Überprüfung eines Zugriffs auf Zugangsinformationen in Form eines Flussdiagramms dargestellt. Hierbei zeigt beispielsweise dieses Flussdiagramm das Einspielen der Regelwerke und die Erkennung eines Angriffs oder eines unberechtigten Zugriffs.

In einem Schritt S1 kann von einer zentralen Einheit die zumindest eine Zugangsinformation 5 oder mehrere Zugangsinformationen der Orchestrierungseinheit 4 bereitgestellt werden. Hierbei können zusätzlich die jeweiligen Zugangsdatenrichtlinien 6 bereitgestellt werden. In einem optionalen Schritt S2 kann wiederum eine Zuordnung der Zugangsdatenrichtlinien 6 zu der jeweiligen Zugangsinformation 5 erfolgen. In einem optionalen Schritt S3 kann wiederum eine Zuordnung der Zugangsinformation 4 zu der Container-Instanz 7 durchgeführt werden und wiederum die Container-Instanz 7 beispielsweise gestartet werden. In einem optionalen Schritt S4 kann durch die Orchestrierungseinheit 4 überprüft werden, ob für die Zugangsinformation 5 und die Container-Instanz 7 bereits Regeln vorhanden sind. Falls ja, dann kann eine Erweiterung des Regelwerks erfolgen. Dieses Regelwerk kann dann die Zugangsdatenrichtlinie 6 und das Anomalitätsregelwerk 9 umfassen. Falls dies nicht vorhanden ist, so kann eine initiale Erstellung und Instanziierung des Anomalitätsregelwerks 9 erfolgen. Das erstellte beziehungsweise generierte Anomalitätsregelwerk 9 kann in einem optionalen Schritt S5 der Anomalieerkennungseinheit 8 bereitgestellt beziehungsweise zur Verfügung gestellt werden. In einem Schritt S6 kann wiederum ein Zugriff auf die Zugangsinformation 5 durch einen Prozess, insbesondere einen Prozess der Container-Instanz 7, erfolgen. Dies geschieht beispielsweise von außen durch einen Log-in-Versuch beziehungsweise ein Auslesen von Daten.

In einem Schritt S7 kann insbesondere durch die Anomalieerkennungseinheit 8 dieser Zugriff erkannt werden. Daraufhin kann in einem Schritt S8 ein Abgleich beziehungsweise ein Vergleich beziehungsweise ein Überprüfen anhand des Anomalitätsregelwerks 9 durchgeführt werden. Bei Feststellung, dass ein unberechtigter Zugriff erfolgt ist, kann in einem optionalen Schritt S9 eine Alarmierung der Orchestrierungseinheit 4 erfolgen. Hierbei kann nun in einem optionalen Schritt S10 durch die Orchestrierungseinheit 4 ein Abgleich betreffend die Zugangsinformation 5, dass ein unberechtigter Zugriff stattfindet, die dazugehörige Zugangsdatenrichtlinie 6 überprüft werden. Je nachdem, welche Maßnahmen in der Zugangsdatenrichtlinie 6 definiert sind, kann in einem optionalen Schritt S11 eine Rotation beziehungsweise eine Änderung der Zugangsinformation 5 erfolgen. Durch die Orchestrierungseinheit 4 kann wiederum eine Information über die Änderungen der Zugangsinformation 5 gemäß der Definition in der Zugangsdatenrichtlinie 6 an die Container-Instanz 7 übermittelt werden.

Des Weiteren können in einem optionalen Schritt S13 entsprechende Informationen an weitere Instanzen 3 gemäß der Zugangsdatenrichtlinie 6 übermittelt werden.

Insbesondere können durch die vorliegende Erfindung und insbesondere durch die genannten Ausführungsbeispiele folgende Vorteile generiert werden. Insbesondere kann innerhalb der Orchestrierungseinheit 4 definiert werden, welche Zugangsinformationen voneinander abhängig sind und welche Prozesse beziehungsweise Instanzen 3 auf diese zugreifen dürfen. Die Rotation bezüglich der Änderung der Zugangsinformationen kann für jeden einzelnen Namensraum beziehungsweise Container-Instanz 3, 7 individuell konfiguriert werden. Die Zugriffe können sowohl auf den orchestrierten Knoten, also innerhalb der Laufzeitumgebung 2, als auch im ausgelagerten "secret manager", wie zum Beispiel mittels entsprechenden "access logs" erkannt werden. Beispielsweise können Zertifikat-Manager mit der Zugriffserkennung, also mit der Erkennung eines unerlaubten Zugriffs, gekoppelt werden, um eventgesteuerte Zugangsdaten beziehungsweise Zugangsinformationen erneuern zu können. Mit Hilfe der Orchestrierungseinheit 4 kann erfolgte eventgesteuerte Änderungen der Zugangsinformationen die Applikationsworkloads neu gestartet werden. Wird mittels der Überwachungsprobe erkannt, dass eine Applikation nicht korrekt antwortet, können die Zugangsdaten wieder auf den ursprünglichen Wert zurückgesetzt werden und ein Alarm ausgelöst werden.

## Patentansprüche

1. Verfahren zum Überprüfen eines Zugriffs auf Zugangsinformationen innerhalb einer Laufzeitumgebung (2), wobei sich eine Container-Instanz (3, 7) mittel zumindest einer Zugangsinformation (5) in der Laufzeitumgebung (2) authentisieren kann, aufweisend:
- Bereitstellen von zumindest einer Zugangsinformation (5) durch eine Orchestrierungseinheit (4) der Laufzeitumgebung (2),
- Zuordnen von einer Zugangsdatenrichtlinie (6) zu der zumindest einen Zugangsinformation (5) durch die Orchestrierungseinheit (4),
- Zuordnen von der zumindest einen Zugangsinformation (5) an zumindest eine Container-Instanz (7) der Laufzeitumgebung (2) durch die Orchestrierungseinheit (4),
- Erkennen zumindest eines Zugriffs auf die zumindest eine Zugangsinformation (5) durch eine Anomalieerkennungseinheit (8),
- Überprüfen des erkannten Zugriffs durch die Anomalieerkennungseinheit (8) dahingehend, ob der erkannte Zugriff durch eine der zumindest einen Zugangsinformation (5) zugeordnete Container-Instanz (7) erfolgt, und
- falls nicht: Ändern der zumindest einen Zugangsinformation (5) auf Basis der entsprechenden Zugangsdatenrichtlinie (6) durch die Orchestrierungseinheit (4).

2. Verfahren nach Anspruch 1, wobei der das Ändern der zumindest einen Zugangsinformation (5) betreffenden Container-Instanz (7) die geänderte zumindest eine Zugangsinformation (5) bereitgestellt wird.

3. Verfahren nach Anspruch 2, wobei der Container-Instanz (7) die geänderte zumindest eine Zugangsinformation (5) übermittelt wird und anschließend wird eine Aktualisierung der Container-Instanz (7) durchgeführt, wobei von einer Überwachungsfunktion der Container-Instanz (7) überprüft wird, ob die geänderte zumindest eine Zugangsinformation (5) in der Container-Instanz (7) aktualisiert werden konnte.

4. Verfahren nach Anspruch 3, wobei falls die Aktualisierung nicht erfolgreich durchgeführt werden konnte, wird der Orchestrierungseinheit (4) eine entsprechende Information übermittelt und daraufhin wird durch die Orchestrierungseinheit (4) ein erneutes Ändern der bereits geänderten Zugangsinformation (5) durchgeführt, insbesondere die erneut geänderte Zugangsinformation (5) der Container-Instanz (7) übermittelt wird.

5. Verfahren nach einem der vorhergehenden Ansprüche, wobei mit der Orchestrierungseinheit (4) überprüft wird, ob weitere Container-Instanzen (3) die zumindest eine Zugangsinformation (5), welche geändert wird, verwenden, und falls ja, dann werden diesen Container-Instanzen (3) die geänderte Zugangsinformation (5) bereitgestellt.

6. Verfahren nach einem der vorhergehenden Ansprüche, wobei mit der Zugangsdatenrichtlinie (6) festgelegt wird, welche Maßnahmen bei einem unberechtigten Zugriff auf der zumindest einen Zugangsinformation (5) durchzuführen sind.

7. Verfahren nach Anspruch 6, wobei mit den Maßnahmen ein Ausführen bestimmter Befehle auf einer durch den unberechtigten Zugriff betroffenen Container-Instanz (7), ein Übersenden bestimmter Anweisungssignale an eine durch den unberechtigten Zugriff betroffenen Container-Instanz (7) und/oder eine Re-Konfiguration einer durch den unberechtigten Zugriff betroffenen Container-Instanz (7) durchgeführt wird.

8. Verfahren nach einem der vorhergehenden Ansprüche, wobei mit der Zugangsdatenrichtlinie (6) festgelegt wird, welcher Benutzer oder Prozess auf die zumindest eine Zugangsinformation (5) zugreifen darf, insbesondere beim Überprüfen des erkannten Zugriffs die Zugangsdatenrichtlinie (6) berücksichtigt wird.

9. Verfahren nach einem der vorhergehenden Ansprüche, wobei bei dem Überprüfen des erkannten Zugriffs eine individuelle Information betreffend die dieser Zugangsinformation (5) zugeordnete Container-Instanz (7) der Anomalieerkennungseinheit (8) bereitgestellt wird.

10. Verfahren nach einem der vorhergehenden Ansprüche, wobei auf Basis der zumindest einen Zugangsinformation (5) und der Container-Instanzen (3, 7) der Laufzeitumgebung (2) ein Anomalitätsregelwerk (9) durch die Orchestrierungseinheit (4) generiert und der Anomalieerkennungseinheit (8) bereitgestellt wird, wobei das Anomalitätsregelwerk (9) beim Überprüfen es erkannten Zugriffs berücksichtigt wird.

11. Verfahren nach einem der vorhergehenden Ansprüche, wobei falls beim Überprüfen des erkannten Zugriffs festgestellt wird, dass der erkannte Zugriff durch ein unberechtigtes Objekt erfolgt, wird von der Anomalieerkennungseinheit (8) ein entsprechendes Warnsignal generiert und an die Orchestrierungseinheit (4) übermittelt.

12. Verfahren nach Anspruch 11, wobei mit der Orchestrierungseinheit (4) auf Basis des Warnsignals eine situationsangepasste Modifikation der zumindest einen Zugangsinformation (5) durchgeführt wird.

13. Laufzeitumgebungs-System (1) mit,
- einer Laufzeitumgebung (2),
- mehreren Container-Instanzen (3), welche sich mittels eines Zugriffs auf zumindest einen Zugriffsinformation (5) innerhalb der Laufzeitumgebung (2) authentisieren können,
- einer Orchestrierungseinheit (4) zum Bereitstellen der zumindest einen Zugriffsinformation (5),
- der Orchestrierungseinheit (4), die ausgebildet ist, um eine Zugangsdatenrichtlinie (6) zu der zumindest einen Zugangsinformation (5) zu zuordnen,
- der Orchestrierungseinheit (4), die ausgebildet ist, die zumindest eine Zugangsinformation (5) zu zumindest einer Container-Instanz (7) zu zuordnen,
- einer Anomalieerkennungseinheit (8) zum Erkennen zumindest eines Zugriffs auf die zumindest eine Zugangsinformation (5),
- der Anomalieerkennungseinheit (8), die ausgebildet ist, den erkannten zumindest einen Zugriffs dahingehend zu überprüfen, ob der erkannte Zugriff durch eine der zumindest einen Zugangsinformation (5) zugeordnete Container-Instanz (7) erfolgt, und
- der Orchestrierungseinheit (4) , die ausgebildet ist, die zumindest eine Zugangsinformation (5) auf Basis der entsprechenden Zugangsdatenrichtlinie (6) zu ändern, falls der erkannte Zugriff nicht durch die der zumindest einen Zugangsinformation (5) zugeordneten Container-Instanz (7) erfolgt.

14. Computerprogramm (14), welches direkt in einen Speicher (13) einer Steuereinrichtung (12) eines Laufzeitumgebungs-Systems (1) nach Anspruch 13 ladbar ist, mit Programm-Mitteln, um die Schritte des Verfahrens nach einem der Ansprüche 1 bis 12 auszuführen, wenn das Programm (14) in der Steuereinrichtung (12) des Laufzeitumgebungs-Systems (1) ausgeführt wird.

15. Elektronisch lesbarer Datenträger (15) mit darauf gespeicherten elektronisch lesbaren Steuerinformationen, welche derart ausgestaltet sind, dass sie bei Verwendung des Datenträgers (15) in einer Steuereinrichtung (12) eines Laufzeitumgebungs-Systems (1) nach Anspruch 13 ein Verfahren nach einem der Ansprüche 1 bis 12 durchführen.
